# EUROPEAN PATENT SPECIFICATION

(11) **EP 4 510 063 B1**
(45) Date of publication and mention of the grant of the patent: **01.04.2026**
(21) Application number: 23191861.6
(22) Date of filing: 17.08.2023
(51) Int. Cl.: G06Q 20/02, G06Q 20/10

(54) **SYSTEM AND METHOD FOR REAL-TIME CLEARING**
SYSTEM UND VERFAHREN ZUM ECHTZEIT-CLEARING
SYSTÈME ET PROCÉDÉ DE COMPENSATION EN TEMPS RÉEL

(43) Date of publication of application: 19.02.2025
(73) Proprietor: Mastercard International Incorporated, Purchase NY 10577 (US)
(72) Inventor: HOSNY, Ahmed, Dublin, D18 (IE); GROARKE, Peter, Dublin, D18 (IE)
(74) Representative: Murgitroyd & Company

(56) References cited:
- AU-A4- 2020 101 396
- US-A1- 2009 070 171
- US-A1- 2017 300 881
- US-A1- 2021 103 910
- US-A1- 2022 284 421
- US-A1- 2023 082 261
- US-A1- 2023 252 466

## Description

### FIELD OF THE INVENTION

The present disclosure relates to a system and method for at least near-real-time clearing, and more particularly to near-real-time clearing on dual message card networks.

### BACKGROUND TO THE INVENTION

Payment card transactions may be processed with a single message system or a dual message system.

In a single message system, authorization, clearing, and settlement may occur in a single message. The single message system may often be used for transactions involving a personal identification number (PIN) confirmation, such as card-present and automated teller machine (ATM) transactions.

In a dual message system or network, a merchant may need to take multiple steps to acquire funds. For example, these steps may include authentication, authorization, and clearing.

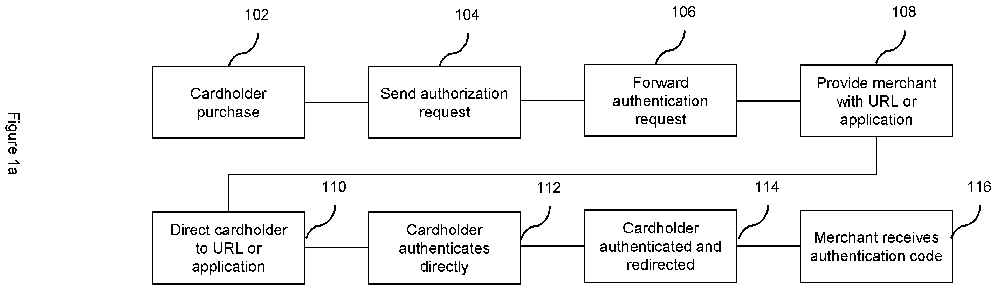

Figure 1a is a flow diagram of an exemplary authentication method. At step 102, a cardholder purchases goods and/or services from a merchant, and pays via an online payment service, including an input of card details. At step 104, the merchant sends an authentication request to a server, such as a 3 Domain Secure (3DS) server, requesting authentication of the cardholder. At step 106, a directory server forwards the authentication request to an access control server (ACS). At step 108, the ACS provides the merchant with a URL or application for cardholder authentication. At step 110, the merchant directs the cardholder to the URL or application provided by the ACS. At step 112, the cardholder authenticates directly with the ACS. At step 114, the cardholder is authenticated and redirected to the merchant's website. At step 116, the merchant receives an authentication code from the ACS, the authentication code being representative of the cardholder being authenticated. This authentication process is in real-time.

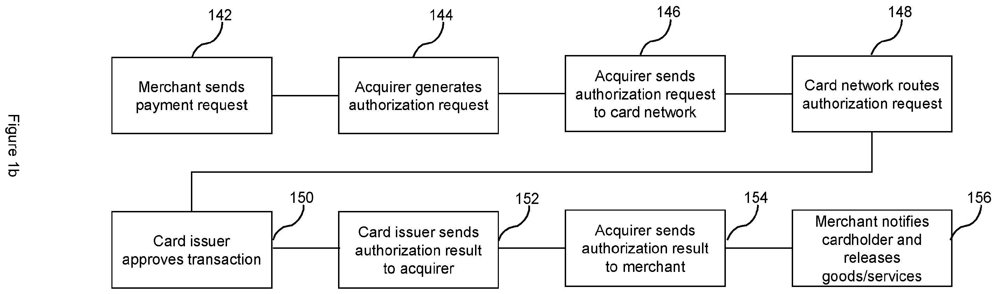

Figure 1b is a flow diagram of an exemplary authorization method. At a first step 142, the merchant sends a payment request to an acquirer. At step 144, the acquirer generates an authorization request. At step 146, the acquirer sends the authorization request to a card network, such as MasterCard. At step 148, the card network routes the authorization request to a card issuer for approval, the card issuer being associated with the cardholder. At step 150, the card issuer approves the transaction. At step 152, the card issuer sends an authorization result to the acquirer. At step 154, the acquirer sends the authorization result to the merchant. At step 156, the merchant notifies the cardholder of the authorization result and releases the goods and/or services. This authorization method is in substantially real-time.

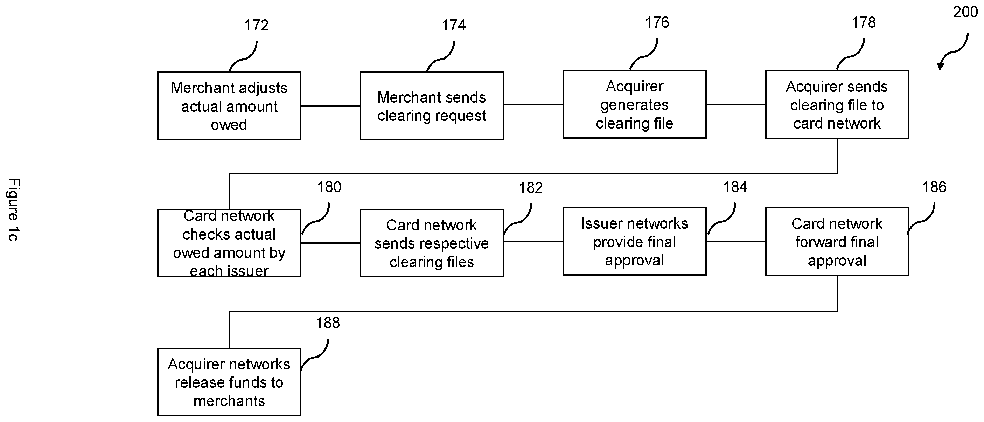

Figure 1c is a flow diagram of an exemplary clearing method. At a first step 172, the merchant adjusts an actual owed amount of money, taking into consideration any additional or modified purchases made by the cardholder, for example additional room purchases for a hotel. At step 174, the merchant sends a clearing request to the acquirer comprising the actual owed amount of money. At step 176, the acquirer generates a clearing file comprising the clearing request received from the merchant, as well as one or more additional clearing requests received from one or more additional merchants. Step 176 is a batch processing step associated with one or more additional transactions and introduces a delay between the merchant requesting and receiving funds. At step 178, the acquirer sends the clearing file to the card network. At step 180, the card network checks actual owed amount by every issuer network associated with the merchant and the one or more additional merchants. At step 182, the card network sends the respective clearing files to each of the issuer networks. At step 184, the issuer networks provide final approval of transactions to the card network. At step 186, the card network forwards the final approval decisions to respective acquirer networks associated with the merchant and the one or more additional merchants. At step 188, the acquirer networks release the funds to the merchants. If a clearing is declined at step 184, a message may be provided via the card network and acquirer, and the merchant can chargeback for the declined clearing. Due to the batch processing step, this clearing method is not in real-time.

Consequently, merchants may prefer to utilize open banking and real-time payment (RTP) networks. In particular, open banking and RTP networks may achieve real-time or NRT settlement for a merchant by a two-step process comprising account holder authentication and consent; and real-time transfer through a RTP network.

The present disclosure has been devised to mitigate or overcome at least some of the above-mentioned problems. US2017300881 A1 discloses secure electronic billing and collection with real-time funds availability. US2023082261 A1 discloses transmitting cross border payments using data rich messaging in real-time from a payor associated with a first payment processing network to a payee associated with a second payment processing network. US2009070171 A1 discloses associating unique transaction identifiers with transactions, and using the unique transaction identifiers for processing. US2022284421 A1 discloses contactless payment technology with payment card network to open banking network conversion. US2021103910 A1 discloses a payment system. US2023252466 A1 discloses a payment system. AU2020101396 A4 discloses a real time electronic consent management system for payment authorisation utilising open banking.

### SUMMARY OF THE DISCLOSURE

In accordance with a first aspect of the present disclosure, there is provided a method according to claim 1.

Accordingly, and in contrast to existing authentication methods, the method of the present invention may check if transactions are eligible for real-time settlement upon receipt of an authentication request, route eligible authentication requests to an open banking network for authentication and consent, and receive or generate an approval ID indicative of consent and authorization for real-time settlement. The approval ID may comprise a consent ID for an Open Banking Payment. The approval ID may subsequently be used for final settlement upon receipt of an authorization result from an acquirer network node, the final settlement being conducted via the open banking network having already received consent. Thus, with the approval ID and other flags present for allowing real-time settlement, an open banking payment may be initiated, thus achieving real-time settlement. The method of the present disclosure may therefore provide a means for at least near-real-time settlement systems.

In some embodiments, the authentication request comprises one or more of: data indicative of information associated with the cardholder; data indicative of an issuer associated with the cardholder; and data indicative of a monetary amount associated with the transaction. The authentication request may thus comprise data useable for determining information associated with the cardholder (e.g., a personal account number (PAN)), an issuer associated with the cardholder, and a monetary amount of the transaction. This data comprised in the authentication request may be used in the determination of whether the transaction is eligible for real-time settlement. Advantageously, the authentication request may thus facilitate real-time settlement of the transaction.

In some embodiments, determining that the transaction is eligible for real-time settlement is based on data stored on a storage means of the RTS node and one or more filtering criteria. Advantageously, the RTS node may easily determine eligibility of the transaction for real-time settlement.

In some embodiments, the storage means comprises data identifying one or more registered merchants and/or data identifying one or more registered card issuer parties. In some embodiments, the one or more filtering criteria comprises one or more of: a merchant ID a bank identification number (BIN) range; and transaction amount. In this way, determination of whether a transaction is eligible for real-time settlement may be at least partially based on whether the merchant is registered for real-time settlement and/or the card issuer associated with the cardholder is registered for real-time settlement.

In some embodiments, the method further comprises: generating a cryptogram comprising the approval ID prior to forwarding the approval ID to the merchant terminal. Advantageously, communications including the approval ID may be more secure.

In some embodiments, the method further comprises: determining that the transaction associated with the authorization request is eligible for real-time settlement; and modifying the authorization request to contain data indicative of the transaction being eligible for real-time settlement. In this way, the card issuer associated with the cardholder may be notified that the transaction associated with the authorization request is eligible for real-time settlement.

In some embodiments, determining that the transaction is eligible for real-time settlement is based on data stored on a storage means of the RTS node and one or more filtering criteria.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

One or more embodiments of the disclosure will now be described, by way of example only, with reference to the accompanying drawings, in which:
Figure 1a is a flow diagram of an exemplary authentication method;
Figure 1b is a flow diagram of an exemplary authorization method;
Figure 1c is a flow diagram of an exemplary clearing method;
Figure 2 is a diagram of an exemplary payment system for real-time payment processing; and
Figure 3 is a flow diagram of an exemplary method for enabling real-time clearing of a transaction between a consumer and a merchant according to the first aspect of the present invention.

Note that the drawings are schematic and accompany the description, illustrating preferred and exemplary embodiments and not necessarily being drawn to scale.

### DETAILED DESCRIPTION

Embodiments of the present disclosure will now be discussed with reference to the enclosed figures. However, a person skilled in the art will readily appreciate that the detailed description given herein with respect to these figures are for explanatory purposes only, as embodiments of the present disclosure may extend beyond these embodiments.

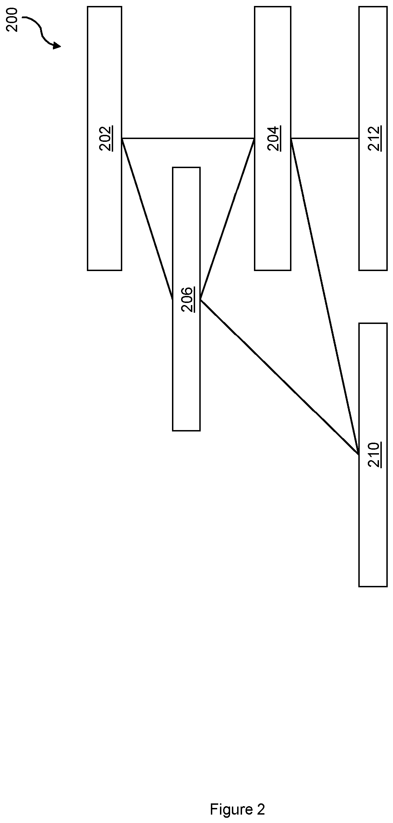

Referring to the drawings and, in particular to FIG. 2, an exemplary payment system 200 for real-time payment processing of a transaction between a merchant and a consumer is shown.

The system 200 comprises a merchant terminal 202. The merchant terminal 202 is operated by, or associated with, the merchant. The merchant terminal 202 is capable of, or adapted to, transmit one or more requests to a first network node 204 and/or a second network node 206 over a network.

The merchant terminal 202 is a device is, for example, a Point of Sale (POS) terminal operating in a given merchant environment, such as a shop. The merchant terminal may comprise a plurality of devices of different types. The merchant terminal 202 may comprise, or be comprised within, a physical terminal. The merchant terminal 202 may comprise one or more of: a portable computing device (e.g. a laptop computer, a Smartphone, a tablet computer etc.); a desktop computer; a physical POS or terminal, for example a terminal located at a physical point of sale such as a shop or restaurant. Additionally or alternatively, the merchant terminal 202 may be a virtual terminal associated with a virtual POS, e.g. a POS at which online purchases or payments can be made. In some embodiments, the merchant terminal 202 may be an application running on a device such as a portable telephone or computer (e.g. a smartphone or tablet computer).

The first network node 204 is a real-time settlement (RTS) node 204 capable of, or adapted to, carry out various functions for facilitating real-time settlement of a transaction between a cardholder and the merchant associated with the merchant terminal 202. The RTS node 204 is capable of, or adapted to, communicate with the merchant terminal 202, the second network node 206, a third network node 210, and/or a fourth network node 212. The RTS node 204 comprises a real-time settlement component (not shown), and a real-time settlement filter (not shown). The RTS node 204 is in communication with a directory server (not shown). The RTS node 204 and the directory server communicate to carry out various functions, and are considered to be part of the same system component herein (i.e., the RTS node 204).

The RTS node 204 is arranged to: facilitate authentication of the cardholder; facilitate acquisition of consent from the cardholder; store eligibility criteria; facilitate the determination of eligibility of the transaction for real-time settlement based on the eligibility criteria; and facilitate settling of the transaction in at least near-real-time.

The eligibility criteria comprises one or more of: merchant identifications (IDs); bank identification number (BIN) ranges; and one or more additional rules. The one or more additional rules may comprise, for example, one or more real-time settlement arrangement with an issuer for transactions above a certain limit. The one or more additional rules may additionally or alternatively comprise, for example, rules associated with real-time settlement for a specific card type (i.e., associated with a particular BIN range).

The RTS node 204 may comprise, or be comprised within, any suitable device or devices. For example, the RTS node 204 may comprise, or be comprised within, a remote server or servers. Additionally or alternatively, the first network node 204 may be comprised within a base station or base stations. The first network node 204 may comprise multiple individual nodes at which the different functions are carried out. The RTS node 204 comprises storage means for storing data identifying one or more registered merchants and/or data identifying one or more registered card issuer parties.

The second network node 206 is an acquirer network node 206, for example a POS or other such device associated with (linked to, operated on behalf of comprised within a system of etc.) a financial institution that processes (or facilitates) card payments made to a merchant.

The third network node 210 is a card issuer node 210 operated by, in association with, or on behalf of a card issuer. The card issuer node 210 provides a payment account and/or an account from which the cardholder can make payments to payment recipients (such as the merchant). The card issuer node 210 receives an authorization request from the RTS node 204; processes the received authorization request to ensure that details provided meet the necessary requirements (e.g. the card number and or other security details are the expected values for use in association with the account); determines whether there are sufficient funds and/or a sufficient credit limit to make the requested transaction payment; and, if so, communicates an authorization result to the acquirer network node 206. Optionally, the card issuer node 210 communicates with the first network node 204 to determine whether the transaction is eligible for real-time settlement; and further optionally adds information indicative of eligibility to the authorization result.

The fourth network node 212 is an open banking node 212 operated by, in associated with, or on behalf of one or more third parties. The open banking node 212 comprises one or more nodes, each associated with respective third parties for carrying out different functions. Communication between the open banking node 212 and the rest of the system 200 is through various application programming interfaces (APIs) associated with the respective other nodes. The open banking node 212 receives an authentication and consent request from the first network node 204; facilitates obtaining cardholder consent; authenticates the consumer; and communicates an authentication and/or consent message to the first network node 204. The open banking node 212 also receives a settlement request from the first network node 204 and settles the transaction in real time.

The merchant terminal 202 and the nodes 204, 206, 210, 212 may communicate using any suitable means. For example, the merchant terminal 202 and the nodes 204, 206, 210 may communicate using one or more of Bluetooth^{™}; Near-Field Communication (NFC); Infra-Red (IR) Communication; Magnetic Induction, etc. In an exemplary embodiment, the network may comprise any network across which communications can be transmitted and received. For example, the network may comprise a wired or wireless network. The network may, for example, comprise one or more of the internet; a local area network; a radio network Such as a mobile or cellular network; a mobile data network or any other suitable type of network, etc. In one embodiment, the network facilitates communicates over the internet via operation on a cloud-based network.

The merchant can register for real-time payment processing by communicating with the RTS node 204, wherein the merchant terminal 202 transmits data comprising a merchant ID for identifying the merchant. The RTS node 204 stores the merchant ID.

Similarly, the card issuer can register as a real-time settlement provider by communicating with the RTS node 204, wherein the card issuer node 210 transmits data comprising a bank identification number (BIN) associated with the card issuer to the RTS node 204. The RTS node 204 stores the BIN.

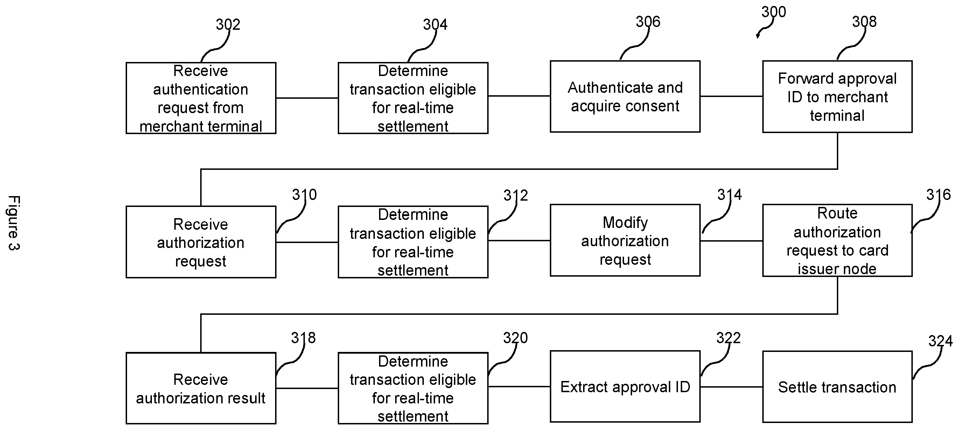

Figure 3 depicts an exemplary process or method for enabling real-time clearing of a transaction between a consumer and a merchant.

The process is started when a cardholder or account holder provides information to initiate a payment to the merchant. The information comprises a card number or other identifier associated with the cardholder's account. The card number or identifier may be referred to as a Primary Account Number (PAN). The number comprised within the received details may be a number of a physical (regular or actual) credit and/or debit card, e.g. a number printed on a cardholder's card and linked to a cardholder's account.

At step 302 of the method, the RTS node 204 receives an authentication request from the merchant terminal 202, the authentication request being associated with the transaction. The authentication request comprises data indicative of the card number or identifier associated with the cardholder's account. The authentication request may also comprises data indicative of other aspect of the transaction, such as data indicative of an issuer associated with the cardholder; and data indicative of a monetary amount associated with the transaction. The authentication request may also comprise merchant data and/or point of sale data.

At step 304, the RTS node 204 determines that the transaction is eligible for real-time settlement. The RTS node 204 determines that the transaction is eligible for real-time settlement based on data stored on storage means of the RTS node 204 and one or more filtering criteria. The data stored on the storage means of the RTS node 204 comprises data associated with the merchant and data associated with the card issuer associated with the cardholder. The one or more filtering criteria comprises one or more of: a merchant ID; a BIN range; and any additional rules. The RTS node 204 determines that the transaction is eligible for real-time settlement by determining that the merchant is associated with data identifying at least one of the one or more registered merchants; and that the card issuer associated with the cardholder is associated with data identifying at least one of the one or more registered card issuer parties. The RTS node 204 also determines that the transaction is eligible for real-time settlement based on the additional rules, such as transaction amount, processing code, and any other suitable rule. It will be understood that if the RTS node 204 determines that the transaction is not eligible for real-time settlement, the transaction will be processed normally and cleared via normal clearing files.

At step 306, the RTS node 204 authenticates and acquires consent from the cardholder, generating an approval identification (ID). Consent is required to initiate an open banking payment. In particular, the RTS node 204 communicates with the open banking node 212. The RTS node 204 communicates an authentication and consent request to the open banking node 212, the authentication and consent request being indicative of authentication and consent being required. The open banking node authenticates the cardholder and obtains consent from the cardholder. The RTS node 204 receives an approval ID from the open banking node 212 indicative of the cardholder being authenticated and having provided consent.

The open banking node 212 authenticates the cardholder and obtains consent from the cardholder by any suitable means. For example, from open banking node 212 authenticates the cardholder and obtains consent from the cardholder by communicating with a cardholder device associated with the cardholder and proving an authentication and consent URL or application. The cardholder authenticates and consents to the transaction via the authentication and consent URL or application. For example, the cardholder enters a unique password or one-time authentication code. The authentication and consent URL or application is associated with an open banking service, such that the cardholder consents to open banking via the open banking service. For example, the cardholder is presented with a notification from their mobile banking app. The cardholder accesses the mobile banking app to provide consent for open banking.

At step 308, the RTS node 204 forwards the approval ID to the merchant terminal 202. Prior to forwarding the approval ID to the merchant terminal 202, the RTS node 204 generates the cryptogram comprising the approval ID, such that secure communication is facilitated. For example, the RTS node 204 generates an accountholder authentication value (AAV) or cardholder authentication verification value (CAVV).

The cardholder is thus authenticated and the merchant can proceed with authorization. At this stage, the merchant terminal 202 sends a payment request to the acquirer network node 206. The payment request comprises the cardholder information (such as the PAN); the merchant ID, and the cryptogram comprising the approval ID.

At step 310, the RTS node 204 receives an authorization request from the acquirer network node 206. The authorization request comprises the cardholder information (such as the PAN); the merchant ID, and the cryptogram comprising the approval ID.

At an optional step 312, the RTS node 204 determines that the transaction associated with the authorization request is eligible for real-time settlement. In particular, the RTS node determines that the transaction is eligible for real-time settlement based on one or more filtering criteria. The one or more filtering criteria comprises one or more of: a merchant ID; a BIN range; and any additional rules. It will be appreciated that the authorization request may comprise different data,for example the merchant ID may be different. Accordingly, this eligibility step is required.

At a further optional step 314, the RTS node 314 modifies the authorization request to contain data indicative of the transaction being eligible for real-time settlement. Thus, the authorization request may serve as an indicator to the issuer that the authorization request is to be processed via real-time settlement.

At step 316, the RTS node 204 routes the authorization request to the card issuer node 210.

The card issuer node 210 processes the received authorization request to ensure that the details provided in the authorization request meet the necessary requirements (e.g. the card number and or other security details are the expected values for use in association with the account associated with the cardholder); determines whether there are sufficient funds and/or a sufficient credit limit to make the requested transaction payment; and, if so, communicates an authorization result to the acquirer network node 206. The authorization result is indicative of the card issuer node 210 approving the transaction, for example following confirmation of the cardholder's card having sufficient funds. The authorization result comprises the cardholder information (such as the PAN); the merchant ID, and the cryptogram comprising the approval ID.

At step 318, the RTS node 204 receives the authorization result from the acquirer network node 206. The received authorization result comprises the cardholder information (such as the PAN); the merchant ID, and the cryptogram comprising the approval ID.

At step 320, responsive to receiving the authorization result, the RTS node 204 determines that the transaction associated with the authorization result is eligible for real-time settlement. In particular, the RTS node 204 determines that the transaction is eligible for real-time settlement based on one or more filtering criteria. The one or more filtering criteria comprises one or more of: a merchant ID; a BIN range; and any additional rules. Notably, as the RTS node 204 receives a response (i.e., the authorization result), it processes the response as if it were a new transaction, determining eligibility.

At step 322, the RTS node 204 extracts the approval ID from the authorization result. In particular, the RTS node 204 extracts the approval ID from the cryptogram containing the approval ID.

At step 324, the RTS node 204 communicates with the open banking network 116 to settle the transaction. In particular, the RTS node 204 communicates with the open banking network 116 to initiate real-time open banking payment to settle the transaction.

Accordingly, the system 200 and method 300 provide a means for conducting a real-time settlement of a transaction using a dual-message system.

Some embodiments may assign computer processing tasks to recipient processors, for example, but not limited to CPUs, GPUs, DSPs, GP-GPUs, quantum processor and/or processors optimised for artificial intelligence tasks. In such embodiments, the processors are the recipients and the processing tasks are the opportunities. In such embodiments, in for example, a complex cloud computing infrastructure, a large number of tasks, of differing types, requiring execution may be received and a large number of processors may be housed within the cloud computing infrastructure.

The description provided herein may be directed to specific implementations. It should be understood that the discussion provided herein is provided for the purpose of enabling a person with ordinary skill in the art to make and use any subject matter defined herein by the subject matter of the claims.

It should be intended that the subject matter of the claims not be limited to the implementations and illustrations provided herein, but include modified forms of those implementations including portions of implementations and combinations of elements of different implementations in accordance with the claims. It should be appreciated that in the development of any such implementation, as in any engineering or design project, numerous implementation-specific decisions should be made to achieve a developers' specific goals, such as compliance with system-related and business related constraints, which may vary from one implementation to another. Moreover, it should be appreciated that such a development effort may be complex and time consuming, but would nevertheless be a routine undertaking of design, fabrication, and manufacture for those of ordinary skill having benefit of this disclosure.

Reference has been made in detail to various implementations, examples of which are illustrated in the accompanying drawings and figures. In the detailed description, numerous specific details are set forth to provide a thorough understanding of the disclosure provided herein. However, the disclosure provided herein may be practiced without these specific details. In some other instances, well-known methods, procedures, components, circuits, and networks have not been described in detail so as not to unnecessarily obscure details of the embodiments.

It should also be understood that, although the terms first, second, etc. may be used herein to describe various elements, these elements should not be limited by these terms. These terms are only used to distinguish one element from another. For example, a first element could be termed a second element, and, similarly, a second element could be termed a first element. The first element and the second element are both elements, respectively, but they are not to be considered the same element.

The terminology used in the description of the disclosure provided herein is for the purpose of describing particular implementations and is not intended to limit the disclosure provided herein. As used in the description of the disclosure provided herein and appended claims, the singular forms "a," "an," and "the" are intended to include the plural forms as well, unless the context clearly indicates otherwise. The term "and/or" as used herein refers to and encompasses any and all possible combinations of one or more of the associated listed items. The terms "includes," "including," "comprises," and/or "comprising," when used in this specification, specify a presence of stated features, integers, steps, operations, elements, and/or components, but do not preclude the presence or addition of one or more other features, integers, steps, operations, elements, components and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. The terms "up" and "down"; "upper" and "lower"; "upwardly" and "downwardly"; "below" and "above"; and other similar terms indicating relative positions above or below a given point or element may be used in connection with some implementations of various technologies described herein.

While the foregoing is directed to implementations of various techniques described herein, other and further implementations may be devised in accordance with the disclosure herein, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method (300) for enabling real-time clearing of a transaction between a cardholder and a merchant, the method (300) comprising:
receiving (302), by a real-time settlement, RTS node (204), an authentication request from a merchant terminal (202) associated with the merchant, the authentication request being associated with the transaction;
determining (304), by the RTS node (204), that the transaction is eligible for real-time settlement;
communicating (306), by the RTS node (204), an authentication and consent request to an open banking node (212) to authenticate and acquire consent from the cardholder, wherein the open banking node (212) authenticates the cardholder, obtains consent from the cardholder and generates an approval identification, ID, and wherein the RTS node (204) receives the approval ID from the open banking node (212);
forwarding (308), by the RTS node (204), the approval ID to the merchant terminal (202);
receiving (310), by the RTS node (204), an authorization request associated with the transaction from an acquirer network node (206), the authorization request comprising the approval ID;
responsive to receiving the authorization request, routing (316), by the RTS node (204), the authorization request to a card issuer node (210) which communicates an authorization result to the acquirer network node (206);
receiving (318), by the RTS node (204), the authorization result from the acquirer network node (206), the authorization result comprising the approval ID;
responsive to receiving the authorization result, extracting (322), by the RTS node (204), the approval ID from the authorization result; and
responsive to extracting the approval ID, communicating (324), by the RTS node (204), with the open banking node (212) to settle the transaction using the approval ID.

2. The method (300) of claim 1, wherein the authentication request comprises one or more of:
data indicative of information associated with the cardholder;
data indicative of an issuer associated with the cardholder; and
data indicative of a monetary amount associated with the transaction.

3. The method (300) of claim 1 or claim 2, wherein determining that the transaction is eligible for real-time settlement is based on data stored on a storage means of the RTS node (204) and one or more filtering criteria.

4. The method (300) of claim 3, wherein the storage means comprises data identifying one or more registered merchants and/or data identifying one or more registered card issuer parties.

5. The method (300) of claim 3 or claim 4, wherein the one or more filtering criteria comprises one or more of:
a merchant ID;
a bank identification number (BIN) range; and
transaction amount.

6. The method (300) of any preceding claim, further comprising:
generating a cryptogram comprising the approval ID prior to forwarding the approval ID to the merchant terminal (202).

7. The method (300) of any preceding claim, further comprising:
determining that the transaction associated with the authorization request is eligible for real-time settlement; and
modifying the authorization request to contain data indicative of the transaction being eligible for real-time settlement.

8. The method (300) of claim 7, wherein determining that the transaction is eligible for real-time settlement is based on data stored on a storage means of the RTS node (204) and one or more filtering criteria.

9. A real-time settlement node comprising means for carrying out the steps of claim 1.

## Patentansprüche

1. Ein Verfahren (300) zum Ermöglichen von Echtzeit-Clearing einer Transaktion zwischen einem Karteninhaber und einem Händler, wobei das Verfahren (300) Folgendes beinhaltet:
Empfangen (302), durch einen Echtzeit-Abwicklungs-Knoten, RTS-Knoten (204), einer Authentifizierungsanforderung von einem Händlerterminal (202), das mit dem Händler assoziiert ist, wobei die Authentifizierungsanforderung mit der Transaktion assoziiert ist; Bestimmen (304), durch den RTS-Knoten (204), dass die Transaktion für Echtzeit-Abwicklung in Frage kommt;
Kommunizieren (306), durch den RTS-Knoten (204), einer Authentifizierungs- und Zustimmungsanforderung an einen Open-Banking-Knoten (212), um Zustimmung von dem Karteninhaber zu authentifizieren und zu erwerben, wobei der Open-Banking-Knoten (212) den Karteninhaber authentifiziert, Zustimmung von dem Karteninhaber erhält und eine Genehmigungsidentifikation, Genehmigungs-ID, erzeugt, und wobei der RTS-Knoten (204) die Genehmigungs-ID von dem Open-Banking-Knoten (212) empfängt;
Weiterleiten (308), durch den RTS-Knoten (204), der Genehmigungs-ID an das Händlerterminal (202);
Empfangen (310), durch den RTS-Knoten (204), einer Autorisierungsanforderung, die mit der Transaktion assoziiert ist, von einem Acquirer-Netzwerkknoten (206), wobei die Autorisierungsanforderung die Genehmigungs-ID beinhaltet;
als Reaktion auf das Empfangen der Autorisierungsanforderung, Leiten (316), durch den RTS-Knoten (204), der Autorisierungsanforderung an einen Kartenausstellerknoten (210), der ein Autorisierungsergebnis an den Acquirer-Netzwerkknoten (206) kommuniziert;
Empfangen (318), durch den RTS-Knoten (204), des Autorisierungsergebnisses von dem Acquirer-Netzwerkknoten (206), wobei das Autorisierungsergebnis die Genehmigungs-ID beinhaltet;
als Reaktion auf das Empfangen des Autorisierungsergebnisses, Extrahieren (322),
durch den RTS-Knoten (204), der Genehmigungs-ID aus dem Autorisierungsergebnis; und
als Reaktion auf das Extrahieren der Genehmigungs-ID, Kommunizieren (324), durch den RTS-Knoten (204), mit dem Open-Banking-Knoten (212), um die Transaktion unter Verwendung der Genehmigungs-ID abzuwickeln.

2. Verfahren (300) gemäß Anspruch 1, wobei die Authentifizierungsanforderung eines oder mehrere von Folgendem beinhaltet:
Daten, die Informationen angeben, die mit dem Karteninhaber assoziiert sind;
Daten, die einen Aussteller angeben, der mit dem Karteninhaber assoziiert ist; und Daten, die einen Geldbetrag angeben, der mit der Transaktion assoziiert ist.

3. Verfahren (300) gemäß Anspruch 1 oder Anspruch 2, wobei das Bestimmen, dass die Transaktion für Echtzeit-Abwicklung in Frage kommt, auf Daten, die auf einem Speichermittel des RTS-Knotens (204) gespeichert sind, und einem oder mehreren Filterkriterien basiert.

4. Verfahren (300) gemäß Anspruch 3, wobei das Speichermittel Daten, die einen oder mehrere registrierte Händler identifizieren, und/oder Daten, die eine oder mehrere registrierte Kartenausstellerparteien identifizieren, beinhaltet.

5. Verfahren (300) gemäß Anspruch 3 oder Anspruch 4, wobei das eine oder die mehreren Filterkriterien eines oder mehrere von Folgendem beinhalten:
eine Händler-ID;
einen Bankidentifikationsnummer(BIN)-Bereich; und
einen Transaktionsbetrag.

6. Verfahren (300) gemäß einem der vorhergehenden Ansprüche, das ferner Folgendes beinhaltet:
Erzeugen eines Kryptogramms, das die Genehmigungs-ID beinhaltet, vor dem Weiterleiten der Genehmigungs-ID an das Händlerterminal (202).

7. Verfahren (300) gemäß einem der vorhergehenden Ansprüche, das ferner Folgendes beinhaltet:
Bestimmen, dass die Transaktion, die mit der Autorisierungsanforderung assoziiert ist, für Echtzeit-Abwicklung in Frage kommt; und
Modifizieren der Autorisierungsanforderung, um Daten zu enthalten, die angeben, dass die Transaktion für Echtzeit-Abwicklung in Frage kommt.

8. Verfahren (300) gemäß Anspruch 7, wobei das Bestimmen, dass die Transaktion für Echtzeit-Abwicklung in Frage kommt, auf Daten, die auf einem Speichermittel des RTS-Knotens (204) gespeichert sind, und einem oder mehreren Filterkriterien basiert.

9. Ein Echtzeit-Abwicklungsknoten, der Mittel zum Ausführen der Schritte gemäß Anspruch 1 beinhaltet.

## Revendications

1. Un procédé (300) pour permettre la compensation en temps réel d'une transaction entre un titulaire de carte et un marchand, le procédé (300) comprenant :
la réception (302), par un nœud de règlement en temps réel, RTR (204), d'une demande d'authentification en provenance d'un terminal marchand (202) associé au marchand, la demande d'authentification étant associée à la transaction ;
la détermination (304), par le nœud RTR (204), que la transaction est admissible à un règlement en temps réel ;
la communication (306), par le nœud RTR (204), d'une demande d'authentification et de consentement à un nœud de système bancaire ouvert (212) pour authentifier et acquérir un consentement du titulaire de carte, où le nœud de système bancaire ouvert (212) authentifie le titulaire de carte, obtient un consentement du titulaire de carte et génère une identification, ID, d'approbation, et où le nœud RTR (204) reçoit l'ID d'approbation en provenance du nœud de système bancaire ouvert (212) ;
le transfert (308), par le nœud RTR (204), de l'ID d'approbation au terminal marchand (202) ;
la réception (310), par le nœud RTR (204), d'une demande d'autorisation associée à la transaction en provenance d'un nœud de réseau d'acquéreur (206), la demande d'autorisation comprenant l'ID d'approbation ;
en réponse à la réception de la demande d'autorisation, l'acheminement (316), par le nœud RTR (204), de la demande d'autorisation à destination d'un nœud d'émetteur de carte (210) qui communique un résultat d'autorisation au nœud de réseau d'acquéreur (206) ;
la réception (318), par le nœud RTR (204), du résultat d'autorisation en provenance du nœud de réseau d'acquéreur (206), le résultat d'autorisation comprenant l'ID d'approbation ;
en réponse à la réception du résultat d'autorisation, l'extraction (322), par le nœud RTR (204), de l'ID d'approbation du résultat d'autorisation ; et
en réponse à l'extraction de l'ID d'approbation, la communication (324), par le nœud RTR (204), avec le nœud de système bancaire ouvert (212) pour régler la transaction en utilisant l'ID d'approbation.

2. Le procédé (300) de la revendication 1, où la demande d'authentification comprend un ou plusieurs éléments parmi :
des données indicatives d'informations associées au titulaire de carte ;
des données indicatives d'un émetteur associé au titulaire de carte ; et
des données indicatives d'un montant en numéraire associé à la transaction.

3. Le procédé (300) de la revendication 1 ou de la revendication 2, où la détermination que la transaction est admissible à un règlement en temps réel est basée sur des données stockées sur un moyen de stockage du nœud RTR (204) et un ou plusieurs critères de filtrage.

4. Le procédé (300) de la revendication 3, où le moyen de stockage comprend des données identifiant un ou plusieurs marchands enregistrés et/ou des données identifiant une ou plusieurs parties émettrices de carte enregistrées.

5. Le procédé (300) de la revendication 3 ou de la revendication 4, où les un ou plusieurs critères de filtrage comprennent un ou plusieurs éléments parmi :
une ID de marchand ;
une plage de numéros d'identification bancaire (NIB) ; et
un montant de transaction.

6. Le procédé (300) de n'importe quelle revendication précédente, comprenant en outre :
la génération d'un cryptogramme comprenant l'ID d'approbation avant le transfert de l'ID d'approbation au terminal marchand (202).

7. Le procédé (300) de n'importe quelle revendication précédente, comprenant en outre :
la détermination que la transaction associée à la demande d'autorisation est admissible à un règlement en temps réel ; et
la modification de la demande d'autorisation pour qu'elle contienne des données indicatives du fait que la transaction est admissible à un règlement en temps réel.

8. Le procédé (300) de la revendication 7, où la détermination que la transaction est admissible à un règlement en temps réel est basée sur des données stockées sur un moyen de stockage du nœud RTR (204) et un ou plusieurs critères de filtrage.

9. Un nœud de règlement en temps réel comprenant un moyen pour mettre en œuvre les étapes de la revendication 1.
